(19) Europäisches Patentamt
European Patent Office
Office européen des brevets

(11) **EP 3 461 863 A1**

(12) **EUROPEAN PATENT APPLICATION**

(43) Date of publication:
**03.04.2019 Bulletin 2019/14**

(51) Int Cl.:
***C09D 5/08*** *(2006.01)*

(21) Application number: **17194405.1**

(22) Date of filing: **02.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Enviral Oberflächenveredelung GmbH
14823 Niemegk (DE)**

(72) Inventor: **The designation of the inventor has not
yet been filed**

(74) Representative: **Schulz Junghans
Patentanwälte PartGmbB
Großbeerenstraße 71
10963 Berlin (DE)**

(54) **CORROSION INHIBITING ADDITIVES FOR COATINGS**

(57)     The invention relates to an additive for dry or wet coatings. The additive comprises at least one corrosion inhibitor and a reservoir, wherein the reservoir contains the inhibitor. The weight proportion of the corrosion inhibitor in relation to the total weight of the additive ranges from 5 % to 20 %. The corrosion inhibitors usable to exercise the invention comprise an adsorption inhibitor, a pickling inhibitor and protective coating former. The external dimensions of the reservoir are in the nanometer to micrometer range. The corrosion inhibitor may be released from the reservoir upon a specific trigger.

**EP 3 461 863 A1**

**Description**

Field of the invention

The present invention relates to a corrosion inhibiting additive, a method for producing the corrosion inhibiting additive and the use thereof in coatings that are either applied by dry coating or wet coating.

Background of the invention

Corrosion is an oxidation of metals that lead to their gradual destruction. To prevent corrosion, metals may be coated with polymer containing paints, lacquers or varnishes to protect the metal structures from contacting corrosive species. If the coating is damaged, corrosive species may contact the metal and oxidize its surface. Therefore, corrosion inhibitors may be added to the coating.

Corrosion inhibitors are compounds that decrease the corrosion rate of a metal by neutralizing the corrosive agents such as oxygen, hydrogen sulfide or carbon dioxide.

As the corrosion inhibitor compound is usually converted to another product upon contact with a corrosive agent, the corrosion inhibitor concentration in a coating on a metal surface decreases over time. Therefore, corrosion inhibitors may be filled into nano- or microreservoirs that release the inhibitor only upon mechanical damage or a specific trigger such as a change in local pH. A common disadvantage is the low amount of inhibitor that can be filled in the reservoirs.

The present invention relates to inhibitors in nano- or microreservoirs that are insoluble at ambient conditions and are released from the reservoirs upon a specific trigger.

Terms and definitions

In the context of the present invention, the term "corrosion inhibitor" relates to a compound that inhibits, prevents or minimizes corrosion. Corrosion inhibitors can be categorized as follows:

- Adsorption inhibitors are chemically adsorbed (chemisorption) on the surface of the metal and form a protective thin film.
- Pickling inhibitors react with a potential corrosive component present in aqueous media to form a complex.
- Protective coating formers react with the metal atoms at the surface of the metal to form a metal-inhibitor compound, such as metal phosphate, that forms a protective layer, the so-called conversion coating.

In the context of the present invention, the term "reservoir" relates to a tube or amorphous, porous particle with external dimensions in the nanometer to micrometer range. The cavity of the tube or the pores of the amorphous particle are suitable for the uptake of a compound such as a corrosion inhibitor.

In the context of the present invention, the term "external dimension" relates to the maximum distance of two points on the surface of an amorphous particle wherein the points are connected by a virtual straight crossing the center or the term "external dimension" relates to the length or diameter of a tube wherein the length or the diameter is determined by the outer surface of the tube wall.

In the context of the present invention, the term "additive" relates to a reservoir filled with a corrosion inhibitor.

In the context of the present invention, the term "alkyl" refers to a linear or branched hydrocarbon chain. "$C_{1-10}$-alkyl" refers to a linear or branched hydrocarbon chain that contains 1 ($C_1$) to 10 ($C_{10}$) carbon atoms. "$C_{6-8}$-alkyl" refers to a linear or branched hydrocarbon chain that contains 6 ($C_6$) to 8 ($C_8$) carbon atoms.

In the context of the present invention, the term "release" refers to a release of an inhibitor from a reservoir upon a specific trigger. At ambient conditions, e.g. neutral pH or slightly acidic pH, ambient temperature, ionic strength below 0.1 M or absence of corrosion products, the inhibitor in the reservoir is insoluble or poorly soluble. Corrosion occurs in a wet environment and the onset of corrosion is accompanied by the formation of corrosion products, a change in pH or ionic strength. Such change in pH, ionic strength or the presence of corrosion products increases the solubility of the inhibitor. Then, the inhibitor dissolves in the liquid of the wet environment.

In the context of the present invention, the term "corrosion product" refers to oxides, hydroxides or oxyhydroxydes, in particular oxides, of metals that are formed during gradual destruction of the metal or alloy by oxidation.

Description the invention

According to a first aspect of the invention, an additive for dry or wet coatings is provided. The additive comprises at least one corrosion inhibitor and a reservoir, wherein the reservoir contains the inhibitor, characterized in that the weight proportion of the corrosion inhibitor in relation to the total weight of the additive ranges from 5 % to 20 %.

In certain embodiments, the weight proportion of the corrosion inhibitor in relation to the total weight of the additive ranges from 5 % to 18 %.

In certain embodiments, the weight proportion of the corrosion inhibitor in relation to the total weight of the additive ranges from 5 to 15 %.

In certain embodiments, the weight proportion of the corrosion inhibitor in relation to the total weight of the additive ranges from 6 % to 8 %.

In certain embodiments, the weight proportion of the corrosion inhibitor in relation to the total weight of the additive is 6 %.

Additives characterized by a relativly low proportion of the corrosion inhibitor in relation to the total weight of the additive are in particular suitable for coatings that are applied by wet coating.

In certain embodiments, the weight proportion of the corrosion inhibitor in relation to the total weight of the additive ranges from 10 to 20 %.

In certain embodiments, the weight proportion of the corrosion inhibitor in relation to the total weight of the additive ranges from 15 to 20 %.

Additives characterized by a relative high proportion of the corrosion inhibitor in relation to the total weight of the additive are in particular suitable for coatings that are applied by dry coating.

In certain embodiments, the corrosion inhibitor is selected from the group comprising adsorption inhibitor, pickling inhibitor and protective coating former.

In certain embodiments, the corrosion inhibitor is selected from the group comprising an amine, a quinoline, an azole, a metal fluoride, a phosphate, a borate and a molybdate.

In certain embodiments, the azole is selected from imidazole and benzotriazole.

In certain embodiments, the corrosion inhibitor is selected from the group comprising a quinoline, imidazole, benzotriazole, a hexafluorotitanate, a phosphate and a molybdate.

In certain embodiments, the corrosion inhibitor is an adsorption inhibitor, in particular an amine, a quinoline or azole, more particularly a quinoline or azole.

In certain embodiments, the corrosion inhibitor is an adsorption inhibitor, in particular an amine, a quinoline imidazole or benzotriazole, more particularly a quinoline or benzotriazole.

In certain embodiments, the corrosion inhibitor is a pickling inhibitor, in particular a metal fluoride, more particularly a hexafluorotitanate.

In certain embodiments, the corrosion inhibitor is a protective coating former, in particular a phosphate, a borate or a molybdate, more particularly a phosphate or a molybdate.

In certain embodiments, the corrosion inhibitor is selected from the group comprising 1-methyl-1H-benzotriazole, 8-hydroxyquinoline, tris(8-hydroxyquinolinato) aluminium, bis(8-hydroxyquinolinato)barium, bis(8-hydroxyquinolinato)nickel, $K_2TiF_6$, $(NH_4)_2TiF_6$, $Na_2MoO_4$ and alkyl phosphate, in particular $C_{1-10}$-alkyl-O-$PO_3H_2$, more particular $C_{6-8}$-O-$PO_3H_2$.

In certain embodiments, the corrosion inhibitor is selected from the group comprising 1-methyl-1H-benzotriazole, 8-hydroxyquinoline, tris(8-hydroxyquinolinato) aluminium, bis(8-hydroxyquinolinato)barium, bis(8-hydroxyquinolinato)nickel, $K_2TiF_6$, $(NH_4)_2TiF_6$, $C_{1-10}$-alkyl-O-$PO_3H_2$, in particular $C_{6-8}$-O-$PO_3H_2$, and $Na_2MoO_4$.

In certain embodiments, the corrosion inhibitor is selected from the group comprising $K_2TiF_6$, $(NH_4)_2TiF_6$ and $Na_2MoO_4$. These inhibitors are in particular suitable for additives used in dry coatings.

In certain embodiments, the corrosion inhibitor is selected from the group comprising 1-methyl-1H-benzotriazole, 8-hydroxyquinoline, tris(8-hydroxyquinolinato) aluminium, bis(8-hydroxyquinolinato)barium, bis(8-hydroxyquinolinato)nickel and $C_{1-10}$-alkyl-O-$PO_3H_2$. These inhibitors are in particular suitable for additives used in wet coatings.

In certain embodiments, the corrosion inhibitor is selected from the group comprising quinoline, imidazole and benzotriazole.

In certain embodiments, the corrosion inhibitor is selected from the group comprising imidazole and benzotriazole, in particular 1-methyl-1 H-benzotriazole.

In certain embodiments, the corrosion inhibitor is selected from the group comprising 8-hydroxyquinoline, tris(8-hydroxyquinolinato)aluminium, bis(8-hydroxyquinolinato)barium, bis(8-hydroxyquinolinato) nickel.

In certain embodiments, the corrosion inhibitor is selected from the group comprising $K_2TiF_6$ and $(NH_4)_2TiF_6$.

In certain embodiments, the corrosion inhibitor is selected from the group comprising alkyl-O-$PO_3H_2$ and $Na_2MoO_4$.

In certain embodiments, the corrosion inhibitor is selected from the group comprising $C_{1-10}$-alkyl-O-$PO_3H_2$, in particular $C_{6-8}$-alkyl-O-$PO_3H_2$, and $Na_2MoO_4$.

In certain embodiments, the external dimensions of the reservoir are in the nanometer to micrometer range.

In certain embodiments, the external dimensions of the reservoir ranges from 10 nm to 50 $\mu$m.

In certain embodiments, the external dimension of an amorphous particle ranges from 250 nm to 30 $\mu$m, in

particular from 3 μm to 30 μm. Here, the external dimension relates to the maximum distance of two points on the surface of an amorphous particle wherein the points are connected by a virtual straight crossing the center of the particle.

In certain embodiments, the amorphous particle is porous. The pores have an average diameter ranging from 5 nm to 50 nm, in particular 10 nm to 40 nm.

In certain embodiments, the external dimension of an amorphous particle ranges from 250 nm to 30 μm, in particular from 3 μm to 30 μm and the amorphous particle is porous.

The external dimensions of a tube are the diameter and the length, wherein the length or the diameter is determined by the outer surface of the tube wall.

In certain embodiments, the outside diameter of the tube is between 20 nm and 100 nm, in particular 50 nm.

In certain embodiments, the inside diameter of the tube ranges from 10 nm to 50 nm, in particular 15 nm.

In certain embodiments, the outside diameter of the tube is between 20 nm and 100 nm, in particular 50 nm, and the inside diameter of the tube is between 10 nm and 50 nm, in particular 15 nm.

In certain embodiment, the length of the tube is between 250 nm and 2 μm.

In certain embodiments, the external dimensions of the reservoir are between 20 nm and 50 μm.

In certain embodiments, the external dimensions of the reservoir are between 50 nm and 30 μm.

In certain embodiments, the corrosion inhibitor is released from the reservoir upon a specific trigger.

In certain embodiments, the specific trigger increases the solubility of the corrosion inhibitor. At ambient conditions, the solubility of the corrosion inhibitor is below $2,5 \times 10^1$ mg/ml. Upon a specific trigger, the solubility increases above $2,5 \times 10^1$ mg/ml.

The release occurs in a wet environment such as water, condensed air humidity or an aqueous liquid.

In certain embodiments, the specific trigger is a change in temperature, ionic strength or pH or the presence of corrosion products.

The release might be initiated by one trigger or a combination of at least two triggers.

In certain embodiments, the corrosion inhibitor is released from the reservoir upon a change in temperature, in particular upon a change from ambient temperature to a temperature between 70 °C and 150 °C. Ambient temperature ranges from 0° to 45 °C, in particular 10°C to 30 °C, more particularly 15°C to 25 °C.

In certain embodiments, the adsorption inhibitor is released from the reservoir upon a change in temperature, in particular upon a change from ambient temperature to a temperature between 70 and 150 °C.

In certain embodiments, quinoline, imidazole or benzotriazole is released from the reservoir upon a change in temperature, in particular upon a change from ambient temperature to a temperature between 70 and 150 °C.

In certain embodiments, 1-methyl-1 H-benzotriazole, 8-hydroxyquinoline, tris(8-hydroxyquinolinato) aluminium, bis(8-hydroxyquinolinato)barium, bis(8-hydroxyquinolinato)nickel is released from the reservoir upon a change in temperature, in particular upon a change from ambient temperature to a temperature between 70 and 150 °C.

In certain embodiments, the corrosion inhibitor is released from the reservoir upon a change in ionic strength or pH.

In certain embodiments, the corrosion inhibitor is released from the reservoir upon a change in ionic strength, in particular upon a change from an ionic strength below 1 M to an ionic strength equal to or higher than 1 M. The ionic strength is based on the concentration of a binary electrolyte.

In certain embodiments, the pickling inhibitor is released from the reservoir upon a change in ionic strength, in particular upon a change from an ionic strength below 1 M to an ionic strength equal to or higher than 1 M. In certain embodiments, $K_2TiF_6$ or $(NH_4)_2TiF_6$ is released from the reservoir in particular upon a change in ionic strength, in particular upon a change from an ionic strength below 1 M to an ionic strength equal to or higher than 1 M.

In certain embodiments, the corrosion inhibitor is released from the reservoir upon a change in pH.

In certain embodiments, the corrosion inhibitor is released from the reservoir upon a change from a neutral pH (pH 6-8) to an acidic pH (pH< 6) or to an alkaline pH (pH > 8).

In certain embodiments, the corrosion inhibitor is released from the reservoir upon a change from a neutral pH (pH 6-8) to an acidic pH (pH< 5) or to an alkaline pH (pH > 9).

In certain embodiments, the corrosion inhibitor is released from the reservoir upon a change from a neutral pH (pH 6-8) to an acidic pH (pH< 6), in particular to pH < 5.

In certain embodiments, the corrosion inhibitor is released from the reservoir upon a change from a neutral pH (pH 6-8) to an alkaline pH (pH > 8), in particular to pH > 9.

Upon a change in pH, the solubility of the inhibitor increases. Subsequently, the inhibitor is released out of the reservoir.

In certain embodiments, the adsorption inhibitor or protective coating former is released from the reservoir upon a change in pH.

In certain embodiments, quinoline, benzotriazole or molybdate is released from the reservoir upon a change in pH.

In certain embodiments, 1-methyl-1 H-benzotriazole, 8-hydroxyquinoline; tris(8-hydroxyquinolinato) aluminium, bis(8-hydroxyquinolinato)barium, bis(8-hydroxyquinolinato)nickel or NaMoO$_4$ is released from the reservoir upon a change in pH.

In certain embodiments, the reservoir is selected from an amorphous particle and a tube.

In certain embodiments, the reservoir is selected from SiO$_2$, cationically modified SiO$_2$, CaSiO$_3$, aluminosilicate, TiO$_2$ and a mixture of Al$_2$O$_3$ and AlO(OH), and halloysite.

In certain embodiments, the reservoir is an amorphous particle.

In certain embodiments, the amorphous particle is selected from SiO$_2$, cationically modified SiO$_2$, CaSiO$_3$, aluminosilicate, TiO$_2$ and a mixture of Al$_2$O$_3$ and AlO(OH).

In certain embodiments, the reservoir is a tube.

In certain embodiments, the reservoir is a halloysite.

According to a second aspect of the invention, a use of the additive according to the first aspect of the invention in a coating, in particular in a varnish, lacquer, paint or primer, is provided.

In certain embodiments, the weight proportion of the additive in relation to the weight proportion of the coating ranges between 1 wt% and 10 wt%.

In certain embodiments, the weight proportion of the additive in relation to the weight proportion of the coating ranges between 3 wt% to 5 wt%.

In certain embodiments, the additive is added to a powder used for powder coating and the weight proportion of the inhibitor in relation to the total weight of the additive ranges from 10 to 20 %, in particular from 15 to 20 %.

In certain embodiments, the additive is mixed with polymers that cure at a temperature ranging from 130 °C to 200 °C.

In certain embodiments, the additive is mixed with polymers that cure at a temperature ranging from 130 °C to 150 °C or from 160 °C to 200 °C.

In certain embodiments, the additive is mixed with polymers that cure at a temperature ranging from 130 °C to 150 °C.

In certain embodiments, the additive is mixed with polymers that cure at a temperature ranging from from 160 °C to 200 °C.

In certain embodiments, the additive is mixed with epoxy or polyester based polymers.

In certain embodiments, the additive is mixed with epoxy based polymers.

In certain embodiments, the additive is mixed with polyester based polymers.

In certain embodiments, the additive is added to a coating liquid used for wet coating and the weight proportion of the inhibitor in relation to the total weight of the additive ranges from 5 % to 18 %, in particular from 5 to 15 %, more particularly from 6 % to 8 %.

In certain embodiments, the additive is mixed with thermosets.

In certain embodiments, the additive is mixed with polymers that cure at a temperature ranging from 130 °C to 200 °C.

In certain embodiments, the additive is mixed with polymers that cure at a temperature ranging from 130 °C to 150 °C or from 160 °C to 200 °C.

In certain embodiments, the additive is mixed with polymers that cure at a temperature ranging from 130 °C to 150 °C.

In certain embodiments, the additive is mixed with polymers that cure at a temperature ranging from from 160 °C to 200 °C.

In certain embodiments, the additive is mixed with epoxy, polyester or polyurethane based polymers.

In certain embodiments, the additive is mixed with epoxy based polymers.

In certain embodiments, the additive is mixed with polyester based polymers.

In certain embodiments, the additive is mixed with polyurethane based polymers.

Examples

*Example 1: Production of additives for wet coatings using amorphous particles*

(A) Preparation of 1.4 %w aqueous solution of Potassium hexafluorotitanate(IV) (Mw = 240.05 g/mol) at pH 7. The solution was heated up to boiling temperature in order to obtain a transparent solution.
(B) Preparation of encapsulated nanocapsules with water-soluble inhibitor (Potassium hexafluorotitanate(IV)). 17.37 %w of amorphous silica particles was added to the solution (A) at boiling temperature. The obtained suspension was mixed for 60 min at boiling conditions in order to fill the pores of the amorphous silica particles with dissolved Potassium hexafluorotitanate(IV). Afterwards, the suspension was cooled down to room temperature. Potassium hexafluorotitanate(IV) interacts with the active groups of silica particles and stays bonded by ionic and steric interactions.

(C) Preparation of powder additive for wet coatings.

The cooled suspension (B) was filtered and the obtained precipitate was additionally washed by Milli-Q water. The washed precipitate was dried at 200 °C until the water content is reduced to 0 %. The dried precipitate was milled in order to obtain fine powder with agglomerates of up to 2 μm size. The final yield of the additives production was 92.6 %. Concentration of encapsulated Potassium hexafluorotitanate(IV) was 5.60 %w.

_Example 2: Production of additives for wet coatings using tubes_

The additive production of example 2 was performed in the same way as example 1, except that Halloysite nanotubes instead of amorphous silica particles were added to the solution (A). In this case the size of the additive agglomerates varied from 10 μm to 15 μm.

_Example 3: Production of additives for dry coatings using amorphous particles_

The additive production of example 3 was performed in the same way as example 1, except that 4 %w, instead of 1.4 %w, Potassium hexafluorotitanate(IV) (Mw = 240.05 g/mol) was added to the solution (A). Concentration of encapsulated Potassium hexafluorotitanate(IV) was 18 %w.

_Example 4: Production of additives for dry coating using tubes_

(A) _Preparation of inhibitor aqueous solution._

4 %w of Potassium hexafluorotitanate(IV) (Mw = 240.05 g/mol) was prepared with Milli-Q water at pH 7. Potassium hexafluorotitanate(IV) was dissolved by heating the solution up to 100 °C in order to obtain a transparent solution.

(B) _Preparation of encapsulated nanocapsules with water-soluble inhibitor (Potassium hexafluorotitanate(IV))._

17.37 %w of Halloysite nanotubes were added to solution (A) at boiling temperature. The obtained suspension was mixed for 60 min at boiling conditions in order to fill the inner space of Halloysite nanotubes with dissolved Potassium hexafluorotitanate(IV). Afterwards, the suspension was cooled down to room temperature. Potassium hexafluorotitanate(IV) interacts with the active groups of Halloysite nanotubes and stays bonded by ionic and steric interactions.

(C) _Preparation of powder additive for dry coatings._

The cooled suspension (B) was further processed by a spray dryer with a 0.5 mm nozzle. The spray dryer temperature was set up to 245°C or 120 °C for pre- or after cyclone temperatures, respectively. The suspension loading to the spray dryer was done by a peristaltic pump, set to a 10 rpm rate. The yielded additive agglomerates are 11 μm of size, while the additive side products are 35 μm of size. The final yield of the additive production was 85.79 %.

The weight proportion of the inhibitor in relation to the additive is calculated according to equation (1),

$$c_{inh,3} = \frac{m_{inh,0} - m_{inh,1} - m_{inh,2}}{m_{tot,3}}$$

$$(1),$$

$C_{inh,3}$ = weight proportion of the inhibitor in relation to the weight of the additive

$m_{inh,0}$ = weight of the inhibitor before filtration and washing

$m_{inh,1}$ = weight of the inhibitor after filtration

$m_{inh,2}$ = weight of the inhibitor after washing

$m_{tot,3}$ = total weight of the additive

*Test of additives*

The additives were tested in a salt spray assay according to DIN EN ISO 9227. The results are summarized in table 1. The test was performed using wet coatings.

Table 1: Results of the salt spray assay according to DIN EN ISO 9227

| Reservoir | size in nm | Inhibitor | P, [wt %] | Type of steel | DFT [$\mu$m] | UWtime, [mm] | UWtime standard (DTF) [mm] |
|---|---|---|---|---|---|---|---|
| $SiO_2$ | 250 | MeBTA | 5 | SAE 1008/1010 | 58 | UW505 = 13,57 | k.A. |
| $SiO_2$ | 400 | 8HQ | 3 | DC04B | 99 | UW507 = 0,6 | UW507 (55$\mu$m) = 1,0 |
| $SiO_2$ | 400 | $K_2TiF_6$ | 4,6 | 4310 | 79 | UW573 = 1,4 | UW573 (65 $\mu$m) = 2,8 |
| $SiO_2$ | 400 | $K_2TiF_6$ | 4,6 | DC04B | 63 | UW500 = 1,3 | UW500 (59 $\mu$m) = 1,6 |
| $SiO_2$ | 400 | $K_2TiF_6$ | 4,5 | DC04B | 40 | UW745 = 1,63 | UW745 (48 $\mu$m) = 2,0 |
| $SiO_2$ cat. mod. | 3100 | $(NH_4)_2TiF_6$ | 5 | DC04B | 103 | UW1000 = 2,2 | UW1000 (85$\mu$m) = 2,5 |
| $SiO_2$ cat. mod. | 3100 | $K_2TiF_6$+$BaQ_2$ | 4,9 | DC04B | 55 | UW766 = 2,33 | UW766 (45 $\mu$m) = 2,7 |
| $SiO_2$ cat. mod. | 3100 | $K_2TiF_6$+$NiQ_2$ | 4,9 | DC04B | 63 | UW766 = 1,32 | UW766 (45 $\mu$m) = 2,7 |
| $SiO_2$ cat. mod. | 3100 | $K_2TiF_6$ | 4,7 | DC04B | 49 | UW766 = 1,52 | UW766 (45 $\mu$m) = 2,7 |
| $SiO_2$ cat. mod. | 3100 | $K_2TiF_6$ | 4,7 | DC04B | 40 | UW800 = 1,52 | UW800 (34 $\mu$m) = 2,83 |
| $SiO_2$ cat. mod. | 3100 | $K_2TiF_6$ | 5 | DC04B | 78 | UW500 = 1,0 | UW500 (59 $\mu$m) = 1,6 |
| $SiO_2$ cat. mod. | 3100 | $K_2TiF_6$ | 4,7 | 4310 | 82 | UW573 = 1,2 | UW573 (65 $\mu$m) = 2,8 |
| $SiO_2$ cat. mod. | 3100 | $K_2TiF_6$ | 4,7 | 4310 | 118 | UW573 = 1,4 | UW573 (65 $\mu$m) = 2,8 |
| $SiO_2$ cat. mod. | 3100 | $K_2TiF_6$ | 4,7 | DC04B | 40 | UW745 = 1,9 | UW745 (48 $\mu$m) = 2,0 |
| Alumo-silicate | 2000x 50 | $K_2TiF_6$+$NiQ_2$ | 4,9 | DC04B | 58 | UW766 = 1,63 | UW766 (45 $\mu$m) = 2,7 |
| Alumo-silicate | 2000x 50 | $K_2TiF_6$ | 4,7 | DC04B | 54 | UW766 = 1,1 | UW766 (45 $\mu$m) = 2,7 |
| Alumo-silicate | 2000x 50 | $K_2TiF_6$ | 4,6 | 4310 | 90 | UW573 = 1,8 | UW573 (65 $\mu$m) = 2,8 |
| Alumo-silicate | 2000x 50 | $K_2TiF_6$ | 4,6 | DC04B | 66 | UW500 = 1,4 | UW500 (59 $\mu$m) = 1,6 |
| Alumo-silicate | 2000x 50 | $K_2TiF_6$ | 4,5 | DC04B | 37 | UW800 = 2,27 | UW800 (34 $\mu$m) = 2,83 |
| Alumo-silicate | 2000x 50 | $K_2TiF_6$ | 4 | DC04B | 40 | UW800 = 1,52 | UW800 (34 $\mu$m) = 2,83 |
| Alumo-silicate | 2000x 50 | $K_2TiF_6$ | 4,6 | DC04B | 33 | UW745 = 1,37 | UW745 (48 $\mu$m) = 2,0 |
| $Al_2O_3$/ AlO(OH) | 25000 | 8HQ | 4,3 | DC04B | 41 | UW800 = 2,2 | UW800 (34 $\mu$m) = 2,83 |

(continued)

| Reservoir | size in nm | Inhibitor | P, [wt %] | Type of steel | DFT [μm] | UWtime, [mm] | UWtime standard (DTF) [mm] |
|---|---|---|---|---|---|---|---|
| $TiO_2$ | 400 | $Na_2MoO_4$ | 3 | A2024 (Alu) | 80 | UW400 = 2,0 | UW400 (77) = 3,1 |
| $TiO_2$ | 400 | Korantin SMK | 3 | A2024 (Alu) | 76 | UW400 = 2,6 | UW400 (77) = 3,1 |

*P: Weight proportion of the additive in relation to the weight of the wet coating; DFT: Dry film thickness; UWtime: The subsurface corrosion underneath the coating (UW) is measured in mm, the time indicates the hours of salt spraying, for example UW507 = 0.6 means that 0.6 mm subsurface corrosion was measured after 507 hours of salt spraying; cat. mod.: cationically modified; MeBTA: 1-methyl-1H-benzotriazole ; $AlQ_3$: tris(8-hydroxyquinolinato)aluminium; 8HQ: 8-hydroxyquinoline; $BaQ_2$: bis(8-hydroxyquinolinato)barium; NiQ2: bis(8-hydroxyquinolinato)nickel; Korantin SMK: Alkyl-phosphate; standard: dried liquid coating without additive*

**Claims**

1. An additive for dry or wet coatings wherein the additive comprises at least one corrosion inhibitor and a reservoir, wherein the reservoir contains the inhibitor,
   **characterized in that**
   the weight proportion of the corrosion inhibitor in relation to the total weight of the additive ranges from 5 % to 20 %.

2. The additive according to claim 1, wherein the weight proportion of the corrosion inhibitor in relation to the total weight of the additive ranges from 5 % to 18 %, in particular from 5 to 15 %, more particularly from 6 % to 8 %.

3. The additive according to claim 1, wherein the weight proportion of the corrosion inhibitor in relation to the total weight of the additive ranges from 10 to 20 %, in particular from 15 to 20 %.

4. The additive according to any one of the preceding claims, wherein the corrosion inhibitor is selected from the group comprising

   - adsorption inhibitor, in particular an amine, a quinoline and azole, more particularly a quinoline and azole, wherein in particular the azole is selected from imidazole and benzotriazole,
   - pickling inhibitor, in particular a metal fluoride, more particularly a hexafluorotitanate,
   - protective coating former, in particular a phosphate, a borate and a molybdate, more particularly a phosphate and a molybdate.

5. The additive according to any one of the preceding claims, wherein the corrosion inhibitor is selected from the group comprising

   - 1-methyl-1 H-benzotriazole, 8-hydroxyquinoline; tris(8-hydroxyquinolinato) aluminium, bis(8-hydroxyquinolinato)barium, bis(8-hydroxyquinolinato)nickel,
   - $K_2TiF_6$, $(NH_4)_2TiF_6$,
   - Alkyl-phosphate, in particular $C_{1-10}$-alkyl-O-$PO_3H_2$, more particularly $C_{6-8}$-alkyl-O-$PO_3H_2$, $Na_2MoO_4$.

6. The additive according to any one of the preceding claims, wherein the external dimensions of the reservoir are in the nanometer to micrometer range, in particular between 10 nm and 50 μm, more particularly between 50 nm and 30 μm.

7. The additive according to any one of the preceding claims, wherein the corrosion inhibitor is released from the reservoir upon a specific trigger, in particular upon a change in temperature, ionic strength or in pH or the presence of corrosion products.

8. The additive according to any one of the preceding claims, wherein the reservoir is selected from

- an amorphous particle, in particular $SiO_2$, cationically modified $SiO_2$, $CaSiO_3$, aluminosilicate, $TiO_2$ and a mixture of $Al_2O_3$ and $AlO(OH)$, and
- a tube, in particular halloysite.

9.  Use of the additive according to any one of the preceding claims in a coating, in particular in a varnish, lacquer, paint or primer.

10. The use according to claim 9, wherein the weight proportion of the additive in relation to the weight proportion of the coating ranges between 1 wt% and 10wt%, in particular 3 wt% to 5 wt%.

11. The use according to claim 9, wherein the additive is added to a powder used for powder coating and the weight proportion of the inhibitor in relation to the total weight of the additive ranges from 10 to 20 %, in particular from 15 to 20 %.

12. The use according to any one of the preceding claims 9 to 10, wherein the additive is mixed with polymers that cure at a temperature ranging from 130 °C to 200 °C, in particular epoxy or polyester based polymers.

13. The use according to claim 9, wherein the additive is added to a coating liquid used for wet coating and the weight proportion of the inhibitor in relation to the total weight of the additive ranges from 5 % to 18 %, in particular from 5 to 15 %, more particularly from 6 % to 8 %.

14. The use according to any one of the preceding claims 9 or 12, wherein the additive is mixed with thermosets, in particular polymers that cure at a temperature ranging from 130 °C to 200 °C, more particularly epoxy, polyester or polyurethane based polymers.

Europäisches Patentamt
European Patent Office
Office européen des brevets

# EUROPEAN SEARCH REPORT

Application Number

EP 17 19 4405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 832 629 A1 (MAX PLANCK GESELLSCHAFT [DE]) 12 September 2007 (2007-09-12) * paragraph [0007] - paragraph [0019] * * abstract; claims 1, 9-11, 15, 19-22, 27, 28; figures 1-6; examples 1-6 * ----- | 1-14 | INV. C09D5/08 |
| X | US 5 492 696 A (PRICE RONALD R [US] ET AL) 20 February 1996 (1996-02-20) * column 4, line 53 - column 5, line 41 * * abstract; claims 1-3; figures 1-5; example 12 * ----- | 1-14 | |

TECHNICAL FIELDS SEARCHED (IPC)

C09D

The present search report has been drawn up for all claims

| Place of search | Date of completion of the search | Examiner |
|---|---|---|
| Munich | 1 February 2018 | Glomm, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .............................................................................................
& : member of the same patent family, corresponding document

EPO FORM 1503 03.82 (P04C01)

**EP 3 461 863 A1**

## ANNEX TO THE EUROPEAN SEARCH REPORT
## ON EUROPEAN PATENT APPLICATION NO.

EP 17 19 4405

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2018

| Patent document cited in search report | | | Publication date | Patent family member(s) | | | Publication date |
|---|---|---|---|---|---|---|---|
| EP 1832629 | A1 | | 12-09-2007 | EP | 1832629 | A1 | 12-09-2007 |
| | | | | JP | 5693819 | B2 | 01-04-2015 |
| | | | | JP | 2009529583 | A | 20-08-2009 |
| | | | | US | 2009078153 | A1 | 26-03-2009 |
| | | | | WO | 2007104457 | A1 | 20-09-2007 |
| US 5492696 | A | | 20-02-1996 | US | 5492696 | A | 20-02-1996 |
| | | | | US | 6280759 | B1 | 28-08-2001 |
| | | | | US | 2001026802 | A1 | 04-10-2001 |
| | | | | US | 2002142022 | A1 | 03-10-2002 |

EPO FORM P0459

For more details about this annex : see Official Journal of the European Patent Office, No. 12/82